# EUROPÄISCHE PATENTSCHRIFT

(11) **EP 2 270 382 B1**
(45) Veröffentlichungstag und Bekanntmachung des Hinweises auf die Patenterteilung: **27.03.2019**
(21) Anmeldenummer: 10006789.1
(22) Anmeldetag: 01.07.2010
(51) Int. Cl.: F16L 57/04, F16L 59/14

(54) **Dämmschichtbildende Bahn zur Beschichtung von langgestreckten Metallbauteilen und Verfahren zum Aufbringen einer dämmschichtbildenden Bahn**
Insulating layer strip for covering elongated metal components and method for applying an insulating layer strip
Bande de formation de couche isolante pour le revêtement de composants métalliques allongés et procédé d'application d'une bande formant une couche isolante

(30) Priorität: 02.07.2009 DE 102009033012
(43) Veröffentlichungstag der Anmeldung: 05.01.2011
(73) Patentinhaber: Sika Technology AG, 6340 Baar (CH)
(72) Erfinder: Friedel, Gerd, 69469 Weinheim (DE); Heidenreich, Thomas, 68199 Mannheim (DE); Bender, Klaus, 35444 Biebertal (DE)
(74) Vertreter: Sika Patent Attorneys

(56) Entgegenhaltungen:
- DE-A1- 10 305 903
- DE-A1- 19 730 153
- US-A- 4 137 949
- US-A- 4 181 157
- US-A1- 2006 182 915

## Beschreibung

Die vorliegende Erfindung betrifft eine dämmschichtbildende Bahn zur Beschichtung von Bauteilen, wie Zuggliedern und Rundstützen, aus Metall sowie ein Verfahren zur Erhöhung der Feuerwiderstandsdauer von metallischen Bauteilen durch Aufbringen einer dämmschichtbildenden Bahn.

Metallische Bauteile, deren Länge ihre Querschnittsfläche um ein vielfaches übersteigt, vor allem Träger sowie Zugglieder und andere runde oder im wesentlichen runde Konstruktionsteile aus Metall, insbesondere aus Stahl, sind häufig verwendete Bauteile, die zumeist auch statisch beansprucht sind. So werden Stahlzugglieder z.B. bei Hallendachkonstruktionen eingesetzt. An statisch beanspruchte Bauteile werden genau gesetzlich geregelte Anforderungen im Hinblick auf das Verhalten im Brandfall gestellt. Unbekleidete Stahlbauteile erreichen im Brandfall sehr schnell kritische Temperaturen, in der Regel werden wegen der sehr schnellen Erwärmung auf z.B. T_{crit}. ∼ 500 °C nur Feuerwiderstandsdauern von deutlich < 30 Minuten erreicht.

Aus DE 103 05 903 ist eine Brandschutzvorrichtung für nicht brennbare Rohre mit einer brennbaren Isolierung bekannt. Im Brandfalle hinterlässt die brennbare Isolierung einen Ringspalt zwischen dem Rohr und einem Wand- oder Deckendurchbruch. Um diesen zu schließen, soll eine Manschette mit einem durch Hitze aufschäumenden Baustoff um das Rohr und dessen Isolierung gewickelt werden, so dass der Bauststoff im Brandfalle den von der brennbaren Isolierung zurückgelassenen Ringspalt schließt. Ein Brandschutz für das Rohr soll mit dieser Vorrichtung nicht erreicht werden und kann es auch nicht, da die Manschette eine für den Baustoff undurchdringliche äußere Umhüllung aus Aluminiumklebeband hat.

Es sind Dämmmanschetten bekannt, die z.B. gemäß DE 197 30 153 auch ein Temperatur- bzw. Feuerbeständiges Material umfassen können. Diese Manschetten bestehen aus flächigem Material, welches in seiner Breite so bemessen wird, dass diese dem Umfang des Rohres entspricht. Die Manschette wird um das Rohr gelegt und die aneinander stoßenden Ränder werden verbunden. Auch eine Ummantelung mit einem kleinen Überlapp ist üblich. Diese Maßnahmen stellen keine befriedigende Art des Brandschutzes für metallische Bauteile dar. Die US 2006/0182915 beschreibt eine feuerschützende Umhüllung für Rohre, die eine Vlieslage und ein intumeszierendes Material umfasst, so dass bei einer Hitzeentwicklung eine isolierende Schicht um das Rohr entsteht, welche dicker ist, als die Umhüllung. Die Umhüllung besteht aus einzelnen Matten, welche mit Bändern oder anderen Mitteln an dem Rohr befestigt werden müssen.

Zur Verbesserung des Brandverhaltens ist es bekannt, Dämmschichtbildner auf die Oberfläche aufzutragen. Dabei handelt es sich um Beschichtungen, welche bei Erwärmung einen isolierenden Schaum, typischerweise aus Kohlenstoff, ausbilden. Massive Stahlzugglieder mit einem günstigen Verhältnis von Umfang zu Querschnittsfläche können durch eine solche Beschichtung mit Dämmschichtbildnern die Feuerwiderstandsklasse F30 erreichen. Es ist jedoch in jedem Fall eine objektbezogene gutachterliche Stellungnahme einer amtlichen Materialprüfanstalt erforderlich.

Aus Gründen der auch im Brandfall zu garantierenden Statik der Gesamtkonstruktion wird bei Stahlzuggliedern die Bemessungsgrenze T_{crit.} auf 350 °C begrenzt. Dies hat zur Folge, dass sehr hohe Schichtdicken des Dämmschichtbildners aufgebracht werden müssen. Ein Spritzauftrag ist wegen der unvermeidlichen Spritzverluste (bis zu 30 %) meist unwirtschaftlich, so dass dem aufwändigen und arbeitsintensiven Anstrich (Pinselauftrag) der Vorzug gegeben wird. Bei einem Anstrich die geforderten hohen Schichtdicken mit der nötigen Gleichmäßigkeit zu erreichen erfordert hohes handwerkliches Geschick und Erfahrung. Dazu kommt eine lange Trockenzeit. Dieselbe Problematik ergibt sich auch für Stahlrundstützen, wenn Feuerwiderstandsdauern von F60 oder F90 erreicht werden sollen.

US 4 181 157 A offenbart eine Bahn zur Erhöhung der Feuerwiderstandsdauer für langgestreckte Bauteile umfassend eine Glasfaserschicht umgeben von Ablationsschichten. US 4 137 949 A offenbart ein Verfahren zur Erhöhung der Feuerwiderstandsdauer eines langgestreckten Bauteils durch Aufbringen dämmschichtbildender Bahnen, die spiralförmig, stoßend um das Bauteil gewickelt werden.

Es besteht daher die Aufgabe, ein Beschichtungsverfahren bereitzustellen, mit welchem längliche Metallbauteile von beliebigem Durchmesser schnell, kostengünstig und dickengenau beschichtet werden können.

Überraschend wurde nun gefunden, dass es möglich ist, eine Bandage aus einem Träger und einer dämmschichtbildenden Masse bereitzustellen, mit welcher langgestreckte und insbesondere runde oder im wesentlichen runde Metallbauteile durch Umwickeln mit der nötigen Beschichtung versehen werden können.

Die obige Aufgabe wird daher gelöst durch eine Verfahren zur Erhöhung der Feuerwiderstandsdauer eines metallischen Bauteiles durch Auftrag eines Dämmschichtbildners auf das Metallbauteil, bei dem zunächst eine dämmschichtbildende Masse auf einen weitmaschigen, flächigen Träger aufgebracht wird, welcher entweder bahnförmig vorliegt oder zu Bahnen geschnitten wird, und das Bauteil sodann mit den Bahnen umwickelt wird. Die Aufgabe wird weiterhin gelöst durch einen bahnförmigen Dämmschichtbildner, welcher eine dämmschichtbildende Masse auf einem weitmaschigen Träger umfasst und dessen Verwendung zur Erhöhung der Feuerwiderstandsdauer eines metallischen Bauteiles. Erfindungsgemäß ist die dämmschichtbildende Masse ein Beschichtigungsmittel auf Basis zumindest einer intumeszierenden Substanz. Unter langgestreckten Metallbauteilen sind solche Bauteile aus Metall zu verstehen, deren Länge ihrer Querschnittsfläche um ein vielfaches übersteigt. Neben runden Querschnitten bewährt sich die Erfindung auch bei rechteckigen und quadratischen Querschnitten. Die Erfindung ist brauchbar und bezieht sich auf alle erdenklichen Querschnitte, wobei rundliche, dreieckige, viereckige, fünfeckige und sechseckige Querschnitte besonders bevorzugt sind. In Bezug auf Querschnitte mit Vorsprüngen, z. B. T- oder H-Träger ist der Wickelaufwand höher, die Erfindung bewährt sich aber trotzdem.

Als Metallbauteil kommen alle aus Metall, insbesondere aus Stahl, bestehenden langgestreckten und insbesondere runden oder im wesentlichen runden Bauteile in Betracht. Beispielhaft seien hier Zugglieder, Zugstäbe, Rundstähle, Rohre und ähnliche genannt. Der Durchmesser kann in weiten Bereichen variieren, besonders bewährt hat sich die Erfindung bei Zugstangen mit Durchmessern im Bereich von 16 bis 48 mm und bei Rohren mit Durchmessern im Bereich von 100 bis 200 mm und bis zu 500 mm.

Erfindungsgemäß wird die dämmschichtbildende Masse auf einen flächigen, weitmaschigen Träger, insbesondere ein Gelege aufgebracht. Als Gelege eignen sich besonders Glasgelege. Es sind prinzipiell auch andere Temperaturbeständige Materialen brauchbar, z.B. Carbonfasern. Die Maschenweiten sollten im Bereich von 1 mm x 1 mm bis 5 mm x 5 mm liegen, bevorzugt bei etwa 3 mm x 3 mm. Es sind auch asymmetrische Gelege möglich (rechteckige Maschen) oder solche mit nicht rechtwinklig zueinander angeordneten Fäden (rautenförmige Maschen). Wichtig ist, dass das Gelege einerseits ausreichend weitmaschig ist, so dass die Ausbildung des isolierenden Schaums nicht behindert wird. Andererseits muss es engmaschig genug sein, um die dämmschichtbildende Masse während des Umwickelns zu tragen. Faserstärken im Bereich von 50 bis 80 Tex, insbesondere 60 bis 70 Tex haben sich bei Glas bewährt. Sofern diese entsprechend weitmaschig sind, ist auch der Einsatz von Geweben, Gestricken, Netzen usw. möglich. Dabei sollte der offene Flächenanteil in etwa dem sich bei Gelegen aus der oben angegegebenen Maschenweite und Fadenstärke ergebenden offenen Flächenanteil entsprechen.

Durch den Träger ergibt sich der weitere Vorteil, dass die von der Masse gebildete Dämmschicht besser fixiert und in ihrer Position gehalten wird. Würde ein Vlies oder ein anderer engmaschiger Träger verwendet werden, so führte das Aufschäumen der Masse zu einem Auf- oder gar Abreißen des Trägers und damit verlöre die Masse ihre Wirkung. Auch eine Behinderung des Aufschäumens ist denkbar.

Als dämmschichtbildende Masse eignen sich wasserbasierende Beschichtungsmittel auf Basis zumindest einer intumeszierenden Substanz, wie sie im Stand der Technik bekannt sind. Beispielsweise eignet sich die kommerziell erhältliche, wasserbasierende Beschichtungsmasse pyroplast®-ST 100 der Firma Rütgers Organics GmbH, DE, welche direkt für die erfindungsgemäß Bahn verwendet werden kann.

Der erste Schritt des erfindungsgemäßen Verfahrens zum Auftrag eines Dämmschichtbildners auf ein Metallbauteil besteht darin, die dämmschichtbildende Masse auf ein Gelege aufzutragen. Hierzu wird das Gelege auf eine Unterlage aufgelegt, zu der die dämmschichtbildende Masse keine oder nur eine geringe Haftung besitzt. Geeignet sind beispielsweise Papier/Aluminium/Kunststofflaminate mit einer Polyethylenoberfläche wie sie auch bei Getränkeverpackungen eingesetzt werden. Anschließend wird die Masse vorzugsweise im Airless-Spritz- oder Gießverfahren in der gewünschten Schichtdicke aufgebracht. Die Masse wird bis zu einer solchen Restfeuchte getrocknet, dass sie noch flexibel ist. Die Trocknung kann vorzugsweise bei Umgebungsfeuchte und Raumtemperatur erfolgen. Nach dem Trocknen auf eine Restfeuchte im Bereich von 20 bis 40 %, z.B. von etwa 30 %, lässt sich der gebildete gleichmäßig dicke Film aus Masse mit eingebettetem Gelege komplett und rückstandsfrei durch Aufrollen von der Unterlage ablösen. Sofern das Gelege nicht bereits bahnförmig vorliegt wird es abschließend zu Bahnen geschnitten. Der erfindungsgemäße bahnförmige Dämmschichtbildner ist nun bereit zum Umwickeln des Bauteils. In einem abgeschlossenen Behältnis kann er auch beliebig gelagert werden. Sofern nötig ist es möglich, eine zu weit ausgetrocknete Bahn wieder zu befeuchten.

Das Umwickeln des Bauteiles erfolgt spiralförmig stoßend, aber nicht überlappend. Dadurch wird eine gleichmäßig dicke Beschichtung der gesamten Oberfläche erreicht. Es ist vorteilhaft, vor dem Umwickeln eine dünne Schicht der dämmschichtbildenden Masse, z.B. mit einem Pinsel, aufzutragen. Diese Schicht verbessert die Haftung des bahnförmigen Dämmschichtbildners.

Wird eine hohe Schichtdicke benötigt, so kann entweder ein entsprechend dicker bahnförmiger Dämmschichtbildner eingesetzt werden oder vorzugsweise wird eine (oder bei Bedarf auch mehrere) weitere Lage(n) des bahnförmigen Dämmschichtbildners aufgewickelt. Es ist auch hierbei vorteilhaft, vor jeder neuen Lage bahnförmigem Dämmschichtbildner eine dünne Schicht der dämmschichtbildenden Masse aufzubringen, um die Haftung zu verbessern und die Oberfläche zu nivellieren.

Es ist weiter bevorzugt, über die oberste Lage des bahnförmigen Dämmschichtbildners eine oder zwei Schicht(en) dämmschichtbildende Masse z.B. mit einem Pinsel aufzubringen, um eine besonders glatte Oberfläche zu erhalten. Nach dem Trocknen lässt sich die Trockenschichtdicke z.B. mittels magnetischer Messverfahren bestimmen. Die Oberfläche kann gewünschten falls in an sich bekannter Weise noch mit einem dekorativen Anstrich versehen werden.

Die erforderliche Trockenschichtdicke ist abhängig vom Profilfaktor des jeweiligen Bauteiles und der zu erzielenden Feuerwiderstandsdauer. Sie richtet sich nach den durch gesetzlich vorgeschriebene Bauteilprüfungen nachzuweisenden Prüfergebnissen.

Ein besonderer Vorteil der Erfindung liegt darin, dass auch sehr hohe Schichtdicken einfach und reproduzierbar innerhalb akzeptabler Zeiten auf langgestreckte, insbesondere auf runde oder im wesentlichen runde Bauteile aufgebracht werden können. Dies war mit den herkömmlichen Verfahren Anstrich oder Spritzen kaum realisierbar. Erfindungsgemäß kann sehr einfach eine weitere Lage oder auch eine Vielzahl weiterer Lagen aufgebracht werden. Damit wird es möglich, auch höhere Feuerwiderstandsdauern als bisher realisiert zu erreichen, ohne dass sich der Aufwand bzw. die Kosten zu stark erhöhen.

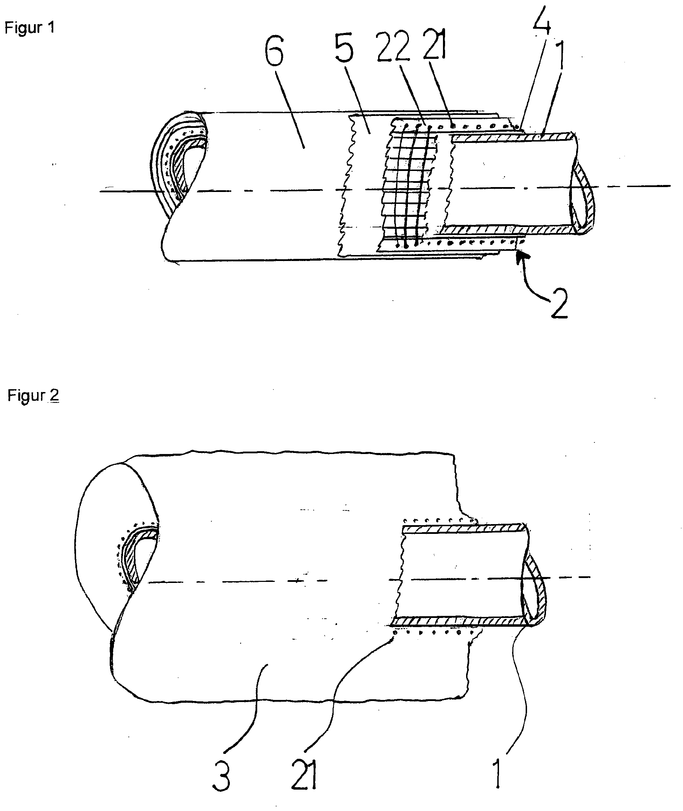

Die Erfindung soll anhand der Figuren 1 und 2 und der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.
Figur 1 zeigt eine erfindungsgemäße dämmschichtbildende Bahn auf einem Rohr.
Figur 2 zeigt das Rohr nach Einwirkung von Feuer

In den beigefügten Figuren 1 und 2 ist ein Rohr 1 als metallisches Bauteil gezeigt, auf den eine erfindungsgemäße dämmschichtbildende Bahn 2 zur Erhöhung der Feuerwiderstandsdauer aufgewickelt ist. In Figur 1 ist der Zustand vor Einwirkung von Hitze bzw. Feuer gezeigt. Auf das Rohr 1, z.B. aus Stahl, wurde zuerst ein Anstrich 4 aus einer dämmschichtbildenden Masse aufgestrichen. Dann wurde die bahnförmige dämmschichtbildende Bahn 2, welche eine dämmschichtbildende Masse 22 auf einem Gelege 21 umfasst, um den Rundstab 1 gewickelt. Anschließend wurde ein weiterer Anstrich 5 aus dämmschichtbildender Masse aufgestrichen und abschließend ein dekorativer Anstrich 6. Die Dicken der Schichten sind nicht maßstäblich, in der Realität sind die Anstriche 4 und 5 ebenso wie der dekorative Anstrich 6 wesentlich dünner als die Bahn 2.

Figur 2 zeigt die bei einem Brand entstehende Situation, wobei die dämmschichtbildenden Massen 4, 22 und 5 eine Dämmschicht 3 ausgebildet haben. Der dekorative Anstrich 6 wird dabei zerstört, die Reste finden sich in und auf der gebildeten Dämmschicht und sind nicht gezeigt. Das weitmaschige Gelege 21 befindet sich in der Dämmschicht 3, es behindert die nach außen, radial vom Rundstab weg erfolgende Ausbildung der Dämmschicht nicht.

### Beispiel 1

Auf einer Unterlage aus Papier/Aluminium/Kunststoff-Laminat wurde ein 1,09 m breites und 5,0 m langes Glasgelege mit einer Maschenweite von 3 mm x 3 mm aufgelegt und die dämmschichtbildende Masse pyroplast®-ST 100 in einer Nassfilmdicke von ca. 3 mm aufgespritzt. Nach 12 h Stunden war die Masse bis zur gewünschten Feuchte von ca. 30 % getrocknet und wurde von der Unterlage durch Aufrollen abgelöst. Aus dem aufgerollten Film der Masse mit dem eingebettetem Gelege wurden 5,0 cm breite Bahnen geschnitten.

Ein Rundstahl mit einem Durchmesser von 30 mm wurde zunächst mit der dämmschichtbildenden Masse in einer Nass-Schichtdicke von ca. 150 µm angestrichen. Dann wurde die Bahn zweimal mit Zwischenanstrich spiralförmig, stoßend um den Rundstahl gewickelt. Abschließend erfolgten 2 weitere Anstriche mit der dämmschichtbildenden Masse. Die Trockenschichtdicke betrug im Mittel 5,0 mm.

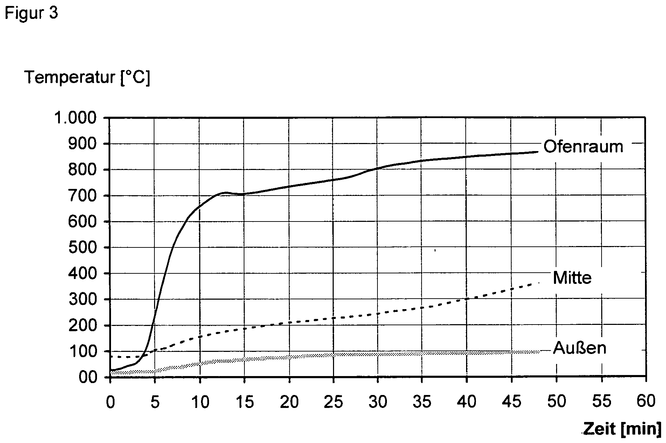

Der Rundstahl wurde in einem Kleinbrandofen nach DIN 4102 Teil 8 gemäß ETK DIN 4102 Teil 2 aufgeheizt. Die Temperatur wurde sowohl im Ofen als auch an der Oberfläche des Stahls unter der dämmschichtbildenden Masse, in dessen Mitte und an den äußeren Enden, mit Thermoelementen gemessen. Der Temperaturverlauf ist in Figur 3 dargestellt. Die hervorragende Isolierwirkung, besonders in der Mitte des Stahlbauteils, lässt sich ohne weiteres erkennen, im Beispiel wurde die Feuerwiderstandsklasse F30 erreicht. Anschließend wurde der Stahl aus dem Ofen entfernt und visuell kontrolliert. Die Dämmschicht war gleichmäßig dick und wies eine geschlossene Oberfläche auf.

### Bezugszeichenliste:

- 1: Rohr
- 2: dämmschichtbildende Bahn
- 21: Gelege
- 22: dämmschichtbildende Masse
- 3: Dämmschicht
- 4: Anstrich mit dämmschichtbildender Masse
- 5: Anstrich mit dämmschichtbildender Masse
- 6: dekorativer Anstrich

## Patentansprüche

1. Dämmschichtbildende Bahn (2) zur Erhöhung der Feuerwiderstandsdauer für langgestreckte metallische Bauteile (1) umfassend einen in eine dämmschichtbildende Masse (22) eingebetteten, weitmaschigen, flächigen Träger (21), **dadurch gekennzeichnet, dass** die dämmschichtbildende Masse (22) ein Beschichtungsmittel auf Basis zumindest einer intumeszierenden Substanz ist.

2. Dämmschichtbildende Bahn (2) gemäß Anspruch 1, **dadurch gekennzeichnet, dass** der Träger (21) ein Gelege, insbesondere ein Glasgelege ist.

3. Dämmschichtbildende Bahn (2) gemäß Anspruch 1 oder 2, **dadurch gekennzeichnet, dass** der Träger (21) eine Maschenweite von 1 mm x 1 mm bis 5 mm x 5 mm, vorzugsweise von etwa 3 mm x 3 mm aufweist.

4. Dämmschichtbildende Bahn (2) gemäß mindestens einem der Ansprüche 1 bis 3, **dadurch gekennzeichnet, dass** die Bahn (2) eine Schichtdicke im Bereich von 1 mm bis 3 mm aufweist.

5. Verfahren zur Erhöhung der Feuerwiderstandsdauer eines langgestreckten metallischen Bauteils (1) durch Aufbringen einer dämmschichtbildenden Masse (22) auf einen weitmaschigen, flächigen Träger (21), wobei der Träger (21) entweder in Bahnen bereitgestellt wird oder nach dem Aufbringen der Masse (22) zu Bahnen geschnitten wird, und die Bahnen spiralförmig, stoßend um das Bauteil (1) gewickelt werden, **dadurch gekennzeichnet, dass** die dämmschichtbildende Masse (22) ein Beschichtungsmittel auf Basis zumindest einer intumeszierenden Substanz ist.

6. Verfahren gemäß Anspruch 5, **dadurch gekennzeichnet, dass** vor dem Umwickeln mit der Bahn (2) auf das Bauteil (1) eine Schicht (4) aus dämmschichtbildender Masse aufgebracht, insbesondere aufgestrichen, wird.

7. Verfahren gemäß Anspruch 5 oder 6, **dadurch gekennzeichnet, dass** nach dem Umwickeln des Bauteils (1) mit der Bahn (2) eine Schicht (5) aus dämmschichtbildender Masse aufgebracht, insbesondere aufgestrichen wird.

8. Verfahren gemäß mindestens einem der Ansprüche 6 bis 7, **dadurch gekennzeichnet, dass** das Bauteil (1) mit mehreren Lagen der Bahn (2) nacheinander umwickelt wird.

9. Verfahren gemäß Anspruch 8, **dadurch gekennzeichnet, dass** zwischen dem Umwickeln mit zwei Bahnen (2) eine oder mehrere Schicht(en) (5) aus dämmschichtbildender Masse aufgebracht, insbesondere aufgestrichen wird(werden).

10. Verfahren gemäß mindestens einem der Ansprüche 6 bis 9, **dadurch gekennzeichnet, dass** das Bauteil (1) ausgewählt ist unter Trägern vorzugsweise mit 3-, 4-, 5-, 6- oder 8 eckigem Querschnitt, Zuggliedern, Rundstützen und Rohren, und insbesondere unter Zugstangen und Rundstützen.

11. Verfahren gemäß mindestens einem der Ansprüche 6 bis 10, **dadurch gekennzeichnet, dass** das Bauteil (1) aus Stahl ist.

12. Verfahren gemäß mindestens einem der Ansprüche 6 bis 11, **dadurch gekennzeichnet, dass** mit der dämmschichtbildenden Bahn (2) eine Trockenschichtdicke von mehr als 3 mm, insbesondere von mehr als 6 mm auf das Bauteil (1) aufgebracht wird.

13. Verwendung einer dämmschichtbildenden Bahn (2) gemäß mindestens einem der Ansprüche 1 bis 4 zur Erhöhung der Feuerwiderstandsdauer von metallischen Bauteilen (1).

## Claims

1. Insulating layer-forming sheet material (2) for increasing fire resistance for elongated metallic components (1), comprising a wide-mesh, two-dimensional carrier (21) embedded into an insulating layer-forming composition (22), **characterized in that** the insulating layer-forming composition (22) is a coating composition based on at least one intumescent substance.

2. Insulating layer-forming sheet material (2) according to Claim 1, **characterized in that** the carrier (21) is a laid scrim, especially a laid glass scrim.

3. Insulating layer-forming sheet material (2) according to Claim 1 or 2, **characterized in that** the carrier (21) has a mesh size of 1 mm x 1 mm to 5 mm x 5 mm, preferably of about 3 mm x 3 mm.

4. Insulating layer-forming sheet material (2) according to at least one of Claims 1 to 3, **characterized in that** the sheet material (2) has a layer thickness in the range from 1 mm to 3 mm.

5. Method of increasing the fire resistance time of an elongated metallic component (1) by applying an insulating layer-forming composition (22) to a wide-mesh, two-dimensional carrier (21), where the carrier (21) is either provided in the form of sheets or is cut into sheets after the composition (22) has been applied, and the sheets are wound in a spiral, abutting the component (1), **characterized in that** the insulating layer-forming composition (22) is a coating composition based on at least one intumescent substance.

6. Method according to Claim 5, **characterized in that**, before the sheet material (2) is wrapped around the component (2), a layer (4) of insulating layer-forming composition is applied, especially painted on.

7. Method according to Claim 5 or 6, **characterized in that**, after the sheet material (2) has been wrapped around the component (1), a layer (5) of insulating layer-forming composition is applied, especially painted on.

8. Method according to at least one of Claims 6 and 7, **characterized in that** multiple plies of the sheet material (2) are wrapped successively around the component (1).

9. Method according to Claim 8, **characterized in that** one or more layer(s) (5) of insulating layer-forming composition is/are applied, especially painted on, between the wrappings with two sheets (2).

10. Method according to at least one of Claims 6 to 9, **characterized in that** the component (1) is selected from carriers preferably with 3-, 4-, 5-, 6- or 8-angular cross section, tension members, round pillars and pipes, especially from tension rods and round pillars.

11. Method according to at least one of Claims 6 to 10, **characterized in that** the component (1) is made of steel.

12. Method according to at least one of Claims 6 to 11, **characterized in that** the insulating layer-forming sheet material (1) is used to apply a dry layer thickness of more than 3 mm, especially of more than 6 mm, to the component (1).

13. Use of an insulating layer-forming sheet material (2) according to at least one of Claims 1 to 4 for increasing the fire resistance time of metallic components (1).

## Revendications

1. Bande formant une couche isolante (2) pour augmenter la durée de résistance au feu de composants métalliques allongés (1), comprenant un support plat à mailles larges (21) incorporé dans une masse formant une couche isolante (22), **caractérisée en ce que** la masse formant une couche isolante (22) est un agent de revêtement à base d'au moins une substance intumescente.

2. Bande formant une couche isolante (2) selon la revendication 1, **caractérisée en ce que** le support (21) est un non-tissé, notamment un non-tissé de verre.

3. Bande formant une couche isolante (2) selon la revendication 1 ou 2, **caractérisée en ce que** le support (21) présente une largeur de mailles de 1 mm x 1 mm à 5 mm x 5 mm, de préférence d'environ 3 mm x 3 mm.

4. Bande formant une couche isolante (2) selon au moins l'une quelconque des revendications 1 à 3, **caractérisée en. ce que** la bande (2) présente une épaisseur de couche dans la plage allant de 1 mm à 3 mm.

5. Procédé d'augmentation de la durée de résistance au feu d'un composant métallique allongé (1) par application d'une masse formant une couche isolante (22) sur un support plat à mailles larges (21), le support (21) étant soit préparé sous la forme de bandes, soit découpé en bandes après l'application de la masse (22), et les bandes étant enroulées en spirale les unes contre les autres autour du composant (1), **caractérisé en ce que** la masse formant une couche isolante (22) est un agent de revêtement à base d'au moins une substance intumescente.

6. Procédé selon la revendication 5, **caractérisé en ce qu'**avant l'enveloppement avec la bande (2), une couche (4) de masse formant une couche isolante est appliquée, notamment enduite, sur le composant (1).

7. Procédé selon la revendication 5 ou 6, **caractérisé en ce qu'**après l'enveloppement du composant (1) avec la bande (2), une couche (5) de masse formant une couche isolante est appliquée, notamment enduite.

8. Procédé selon au moins l'une quelconque des revendications 6 à 7, **caractérisé en ce que** le composant (1) est enveloppé avec plusieurs couches successives de la bande (2).

9. Procédé selon la revendication 8, **caractérisé en ce qu'**une ou plusieurs couches (5) de masse formant une couche isolante sont appliquées, notamment enduites, entre l'enveloppement avec deux bandes (2).

10. Procédé selon au moins l'une quelconque des revendications 6 à 9, **caractérisé en ce que** le composant (1) est choisi parmi les supports de section transversale de préférence à 3, 4, 5, 6 ou 8 angles, les barres de traction, les raccords cylindriques et les tubes, et notamment parmi les tiges de traction et les raccords cylindriques.

11. Procédé selon au moins l'une quelconque des revendications 6 à 10, **caractérisé en ce que** le composant (1) est en acier.

12. Procédé selon au moins l'une quelconque des revendications 6 à 11, **caractérisé en ce qu'**une épaisseur de couche sèche de plus de 3 mm, notamment de plus de 6 mm, est appliquée sur le composant (1) avec la bande formant une couche isolante (2).

13. Utilisation d'une bande formant une couche isolante (2) selon au moins l'une quelconque des revendications 1 à 4 pour augmenter la durée de résistance au feu de composants métalliques (1).
